# EUROPEAN PATENT SPECIFICATION

(11) **EP 3 530 938 B1**
(45) Date of publication and mention of the grant of the patent: **24.05.2023**
(21) Application number: 19158712.0
(22) Date of filing: 22.02.2019
(51) Int. Cl.: F03D 80/40

(54) **ICE MELTING DEVICE FOR BLADE, BLADE AND WIND TURBINE**
EISSCHMELZVORRICHTUNG FÜR SCHAUFEL, SCHAUFEL UND WINDTURBINE
DISPOSITIF DE FONTE DE GLACE POUR PALE, PALE ET ÉOLIENNE

(30) Priority: 27.02.2018 CN 201810161119
(43) Date of publication of application: 28.08.2019
(73) Proprietor: Beijing Goldwind Science & Creation Windpower Equipment Co., Ltd., Beijing 100176 (CN)
(72) Inventor: QI,, Yiran, Daxing District,, Beijing 100176 (CN); SHI,, Chaofeng, Daxing District,, Beijing 100176 (CN); XIE,, Yanpeng, Daxing District,, Beijing 100176 (CN)
(74) Representative: Vossius & Partner Patentanwälte Rechtsanwälte mbB

(56) References cited:
- EP-A1- 2 754 891
- EP-A1- 3 109 465
- WO-A1-2007/136260
- WO-A1-2012/164167
- CN-A- 107 642 465

## Description

### FIELD

The present application relates to the technical field of wind power generation, and in particular to an ice melting device for a blade, a blade having the ice melting device and a wind turbine.

### BACKGROUND

The operating environment of a wind turbine directly affects the power generation efficiency of the wind turbine. In the case that the wind turbine is operated under extreme weather conditions such as frost, cold wave and freezing rain, phenomena of ice (frost) coating and snow hanging on a blade may occur. Due to the phenomena of ice (frost) coating, snow hanging and the like of the blade, a cross-sectional shape of the blade of the wind turbine may be changed, which reduces the efficiency of wind energy absorption of the blade; a mechanical operation damage of the wind turbine may be caused, the load of the wind turbine may be increased, and the center of gravity may shift; the falling of ice blocks causes safety hazard to field personnel and field equipment; and the accuracy of wind measurement may also be affected, which brings proprietors serious economic loss of power generation. For example, the cumulative number of ice-covered days in a wind farm in Gansu Province from October 2016 to April 2017 was more than 60 days, and the cumulative power generation loss is at least 6770.056 thousand kilowatt hours.

In order to solve the phenomena of ice (frost) coating, snow hanging, etc., the blade of the wind turbine is generally deiced. Currently, the deicing methods include passive anti-icing by a solution, mechanical deicing, air thermal anti-icing, microwave deicing, passive anti-icing by a endothermic coating, deicing by electromagnetic shock vibration, passive anti-icing by a waterproof coating, trembling deicing, electro-thermal active deicing, etc. The electro-thermal active deicing method not only has the advantages of high power, small influence on the aerodynamic shape and good maintainability, but also is simple and direct, has a high energy utilization rate and low economic cost, therefore, it is a relatively ideal deicing method and is currently the most widely used and best-performing method.

An ice melting device for a blade which can perform active deicing by using electric energy is provided according to the present application.
EP 3109465 A1 discloses a wind turbine rotor blade including a blade root, a blade tip, an airfoil trailing edge, an airfoil leading edge, a suction side and a pressure side. The wind turbine rotor blade further has an electrical heating device that extends over a longitudinal section which runs from a blade-root-side end to a blade-tip-side end. The electrical heating device consists of two heating mats which are connected to a first supply line by an electrical connection arranged on the blade-root-side end and which are connected to a second supply line by an electrical connection arranged on the blade-tip-side end. In an overlapping region that extends over the entire length of the two heating mats and along the airfoil leading edge, the first heating mat and second heating mat are arranged to overlap each other.
WO 2012164167 A1 discloses a wind turbine blade provided with an elongated heating element. The heating element may be electrically connected to the power supply via a number of electrical conductor elements and joints positioned at the ends of the elongated heating element or on both sides of the heating element. In another embodiment, a heating element includes multiple layers. The conductor element includes multiple branches, and the middle branch extends between two layers of the heating element. The blade body element may include glass fiber, and the heating element may include carbon fiber. A joint element has been bent so as to extend along both sides of the conductor element and the heating element.

### SUMMARY

An ice melting device for a blade which has a novel structure and has excellent heating performance is provided according to the present application, to meet practical needs.

According to an aspect of the present application, an ice melting device for a blade is provided. The ice melting device for the blade may include: a heating portion; a first electrode and a second electrode, wherein the first electrode and the second electrode are arranged at two ends of the first heating portion in a length direction, respectively; and a connecting conductor, wherein the connecting conductor extends in the length direction, a first end of the connecting conductor is connected to the second electrode, and a second end of the connecting conductor and the first electrode are located at a same side. The first heating portion includes a glass fiber cloth and carbon fiber strands, the carbon fiber strands are sewn on the glass fiber cloth or the carbon fiber strands are interwoven with glass fibers of the glass fiber cloth, to be integrated with the glass fiber cloth, and the carbon fiber strands are conductively connected to the first electrode and the second electrode. The connecting conductor is a current-conducting sheet, the connecting conductor is sewn on the glass fiber cloth or arranged to run through the glass fiber cloth, and the connecting conductor is insulated from the first electrode and the carbon fiber strands. With the connecting conductor, power leads connecting to the first electrode and the second electrode are allowed be located at a same side, thereby, in a case that an old blade is modified, an increase of a layer thickness caused by the power leads may be greatly reduced. In addition, the cumbersome wiring work may be reduced and the power leads may be saved.

Preferably, the carbon fiber strands include longitudinal carbon fiber strands and latitudinal carbon fiber strands arranged on the glass fiber cloth in a longitudinal direction and a latitudinal direction respectively, and the longitudinal carbon fiber strands and the latitudinal carbon fiber strands are conductively connected to each other. With the mutual conduction between the longitudinal carbon fiber strands and the latitudinal carbon fiber strands, the heating effect of the melting device for the blade can be prevented from being affected by the breaking of a carbon fiber strand at a certain position.

Preferably, the longitudinal carbon fiber strands and the latitudinal carbon fiber strands are arranged crosswise, to form a grid structure with the longitudinal carbon fiber strands and the latitudinal carbon fiber strands cross each other at each node.

By insulating the connecting conductor from the first electrode and the carbon fiber strands, an electrical circuit is formed to avoid a short circuit.

In another embodiment, an ice melting device may include: a first heating portion and a second heating portion, wherein the heating portion and the first heating portion may be arranged side by side in a width direction of the first heating portion; a first electrode, a second electrode, a third electrode and a fourth electrode, wherein the first electrode and the second electrode are arranged at two ends of the first heating portion in a length direction, respectively, and the third electrode and the fourth electrode may be arranged at two ends of the second heating portion in a length direction, respectively; a connecting conductor, wherein the connection conductor extends in the length direction, the connecting conductor is located between the first heating portion and the second heating portion, and a first end of the connecting conductor may be connected to the second electrode and the fourth electrode respectively, and a second end of the connecting conductor may be located at a same side as the first electrode and the third electrode. The first heating portion and the second heating portion may be connected through a glass fiber cloth, the connecting conductor is a current-conducting sheet and the connecting conductor may be sewn on the glass fiber cloth connecting the first heating portion and the second heating portion or may be arranged to run through the glass fiber cloth, and the connecting conductor is insulated from the first electrode, the third electrode, and the carbon fiber strands. Since the heating device includes the first heating portion and the second heating portion, a blade may be laid integrally by laying the first heating portion and the second heating portion on a pressure surface and a suction surface of the blade respectively, so as to save the time and cost for operation and maintenance.

In a case that the first heating portion and the second heating portion are arranged on the pressure surface and the suction surface of the blade respectively, the connecting conductor may be located at a joint between the pressure surface and the suction surface.

Preferably, a predetermined space is formed between the first heating portion and the second heating portion, the connecting conductor may be a wire and may be accommodated in the predetermined space. In a case that the first heating portion and the second heating portion are arranged on the pressure surface and the suction surface of the blade respectively, the connecting conductor may be located at the joint between the pressure surface and the suction surface.

According to another aspect of the present application, a blade is provided. The blade includes the ice melting device described above, and the ice melting device is built in the blade.

According to another aspect of the present application, a wind turbine is provided. The wind turbine includes the blade described above.

According to the ice melting device for the blade of the present application, with the connecting conductor, power leads connecting to the first electrode and the second electrode are allowed be located at a same side, thereby, in a case that an old blade is modified, an increase of a layer thickness caused by the power leads may be greatly reduced. In addition, the cumbersome wiring work may be reduced and the power leads may be saved.

In addition, according to the ice melting device for the bladeof the embodiment of the present application, the carbon fiber strands of the first heating portion is fixed by the first electrode and the second electrode and by an overlock treatment, which prevents the carbon fiber strands from loosing, so that the carbon fiber strands have a good performance in maintaining a stationary shape.

Besides, according to the ice melting device for the blade of the embodiment of the present application, by using the glass fibers as an insulating material, carbon fibers in a carbon fiber strand can be prevented from being mixed with the adjacent carbon fiber strands, thereby preventing a short circuit.

Moreover, according to the ice melting device for the blade of the embodiment of the present application, since the longitudinal carbon fiber strands and the latitudinal carbon fiber strands are conductively connected to each other, the heating effect of the melting device for the blade can be prevented from being affected by the breaking of a carbon fiber strand at a certain position.

Further, the ice melting device for the blade according to the embodiment of the present application may be designed to have different heating power according to the requirements of the blade, and may be integrally formed with a new blade or built in an old blade.

Furthermore, the ice melting device for the blade according to the embodiment of the present application has a simple manufacturing process and does not required to be assembled in use.

### BRIEF DESCRIPTION OF DRAWINGS

The above and other objects and features of the present application will be clearer from the following description of embodiments in conjunction with the drawings.
Figure 1 is a schematic view showing an ice melting device for a blade according to a first embodiment of the present application.
Figure 2 is a schematic view showing an ice melting device for a blade according to a second embodiment of the present application.
Figures 3 to 8 are schematic views showing that carbon fiber strands and a glass fiber cloth of a first heating portion are in combination.
Figure 9 is a schematic view showing an ice melting device for a blade according to a third embodiment of the present application.
Figure 10 is a schematic view showing an ice melting device for a blade according to a fourth embodiment of the present application.

Reference numerals in the figures:

| | | | |
|---|---|---|---|
| 10 | first heating portion, | 20 | first electrode, |
| 30 | second electrode, | 40 | connecting conductor, |
| 50 | second heating portion, | 60 | third electrode, |
| 70 | fourth electrode. | | |

### DETAILED DESCRIPTION

The embodiments according to the present application will be described in detail with reference to the drawings, the embodiments are shown in the drawings, and the same numeral always represents the same component.

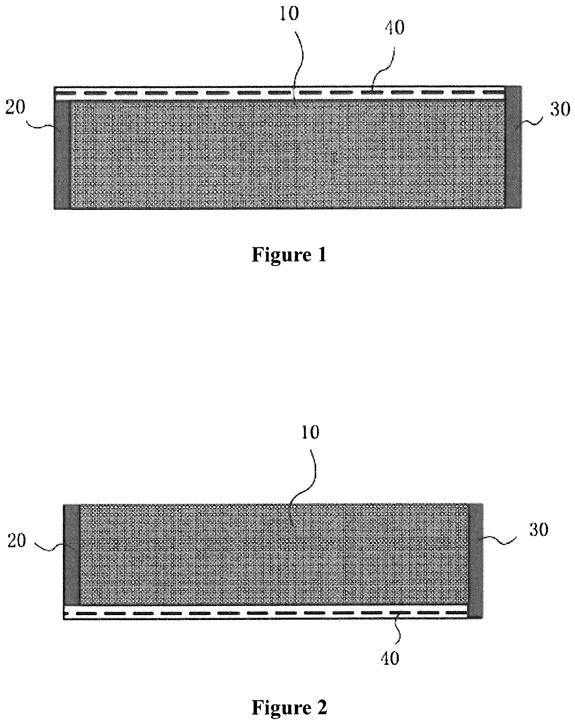

Figure 1 and Figure 2 show an ice melting device for a blade according to an first embodiment and a second embodiment of the present application, respectively. Hereinafter, a specific structure of the ice melting device for the blade will be described with reference to Figures 1 and 2.

As shown in Figures 1 and 2, an ice melting device for a blade may include a first heating portion 10, a first electrode 20 and a second electrode 30, and a connecting conductor 40. Specifically, the first electrode 20 and the second electrode 20 may be arranged at two ends of the first heating portion 10 in a length direction, respectively, to be electrically connected to the first heating portion 10. The connecting conductor 40 may extend in the length direction of the first heating portion 10,a first end of the connecting conductor 40 may be connected to the second electrode 20, and a second end of the connecting conductor 40 and the first electrode 20 may be located at a same side.

The connecting conductor 40 and the first electrode 20 may be connected to a positive power lead and a negative power lead at the same side, respectively, to allow the first heating portion 10, the first electrode 20 and the second electrode 30, and the connecting conductor 40 to form an electrical circuit, so that the first heating portion 10 is energized to heat. Since the power leads connecting the first electrode 20 and the second electrode 30 are arranged at the same side, compared with the method of connecting the first electrode 20 and the second electrode 30 to the power leads at the two ends of the first heating portion 10 respectively, an increase of a layer thickness caused by the power leads may be greatly reduced in a case that an old blade is modified. In addition, the cumbersome wiring work may be reduced and the power leads may be saved.

The ice melting device for the blade in Figure 1 is different from the ice melting device for the blade in Figure 2 in terms of a position of the connecting conductor 40 and a position of connecting the connecting conductor 40 and the second electrode 30. Specifically, in Figure 1, the connecting conductor 40 is located at a first side of the first electrode 20, and a second end of the connecting conductor 40 is connected to a first end of the second electrode 30. However, in Figure 2, the connecting conductor 40 is located at a second side of the first electrode 20 opposite to the first side, and the second end of the connecting conductor 40 is connected to a second end of the second electrode 30 opposite to the first end. It should be understood that, the above description is bases on the states of the ice melting device for the blade shown in Figures 1 and 2, regardless of the state of the ice melting device for the blade in actual use.

The first heating portion 10, the first electrode 20 and the second electrode 30, and the connecting conductor 40 will be described in detail hereinafter.

The first heating portion 10 may include a glass fiber cloth and carbon fiber strands. According to the design of the first heating portion 10, the carbon fiber strands are sewn on the glass fiber cloth, or the carbon fiber strands are interwoven with glass fibers of the glass fiber cloth, to be integrated with the glass fiber cloth. The carbon fiber strands may be conductively connected to the first electrode 20 and the second electrode 30, to form an electrical circuit.

Both carbon fibers and glass fibers are polymer materials, which have features of high heat resistance, high mechanical strength, soft texture, etc., they are easily processed, easy to be combined with composite materials of the blade, and can improve the mechanical strength of the blade. Carbon fiber has advantages such as low specific gravity, high strength, low density, high elasticity, high corrosion resistance, high temperature resistance, high wear resistance, high thermal efficiency, good electrical and thermal conductivity, etc. The strength of the carbon fiber is four times that of ordinary steel and its specific gravity is only equal to 1/4 that of steel, the carbon fiber has light and tough physical properties and stable electrical resistivity. Glass fiber has a good insulation performance, which prevents a carbon fiber strand from being mixed with the adjacent carbon fiber strands, so as to prevent a short circuit.

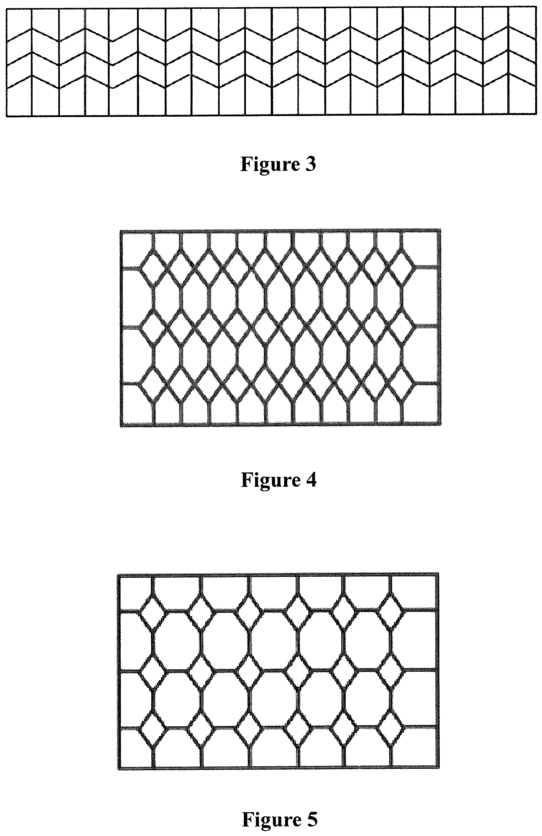

Figures 3 to 8 are schematic views showing that the carbon fiber strands of the first heating portion 10 are combined with the glass fiber cloth, in the figures, black lines are carbon fiber strands, and blank portions refer to the glass fiber cloth. The carbon fiber strands includes longitudinal carbon fiber strands and latitudinal carbon fiber strands arranged on the glass fiber cloth in a longitudinal direction and a latitudinal direction, respectively. The longitudinal carbon fiber strands and the latitudinal carbon fiber strands may be conductively connected to each other, to allow the carbon fiber strands to be connected with each other, and the heating effect of the melting device for the blade can be prevented from being affected by the breaking of a carbon fiber strand at a certain position.

Specifically, as shown in Figure 3, the longitudinal carbon fiber strands and the latitudinal carbon fiber strands of the first heating portion 10 may be arranged crosswise, and may form a polygonal line structure. In this structure, since the structure formed by the carbon fiber strands is relatively simple, the first heating portion 10 may be formed by overlapping and interweaving the longitudinal carbon fiber strands and the latitudinal carbon fiber strands with the glass fibers in the glass fiber cloth.

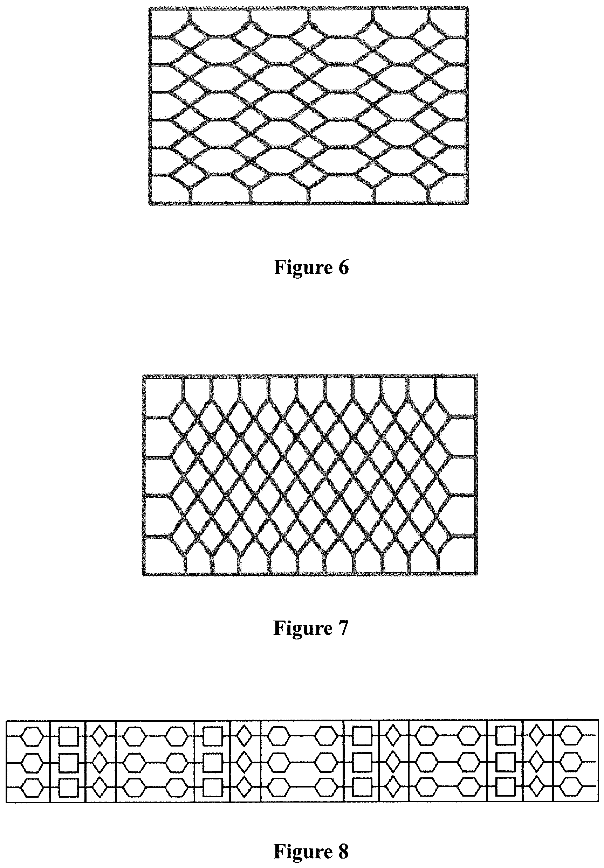

As shown in Figures 4 to 8, the longitudinal carbon fiber strands and the latitudinal carbon fiber strands of the first heating portion 10 may be arranged crosswise to form a grid structure with the longitudinal carbon fiber strands and the latitudinal carbon fiber strands cross each other at each node. For example, the longitudinal carbon fiber strands and the latitudinal carbon fiber strands may form an axis-symmetric structure, to satisfy the isobaric requirement of the first heating portion 10. Specifically, as shown in Figures 4 to 7, the longitudinal carbon fiber strands and the latitudinal carbon fiber strands may forma carbon fiber strand module of a shape such as a diamond, and diamond-shaped modules are connected according to a predetermined pattern, to form a carbon fiber strand module set, thereby forming an axis-symmetric structure. As shown in Figure 8, the longitudinal carbon fiber strands and the latitudinal carbon fiber strands may form a cubic carbon fiber strand module, a diamond-shaped carbon fiber strand module, and a hexagonal carbon fiber strand module, these three shapes of carbon fiber strand modules may be connected according to a predetermined pattern, to from a carbon fiber strand module set, thereby forming an axis-symmetric structure.

When the first heating portion 10 according to Figures 4 to 8 is formed, since the structure formed by the carbon fiber strands is relatively complex, the carbon fiber strand module set may be formed first, and then the carbon fiber strand module set is bonded to the glass fiber cloth by using a connecting piece having high heat resistance. For example, the carbon fiber strand module can be sewn to the glass fiber cloth by using a high-temperature resistant wire, or the carbon fiber strand module can be bonded to the glass fiber cloth by using a high-temperature resistant glue and then a flattening treatment is performed. In order to make the carbon fiber strands have a good performance in maintaining a stationary shape, edges of the carbon fiber strands that are not electrically connected to the first electrode 20 and the second electrode 30 may be overlocked.

Although the specific forms of the combination of the carbon fiber strands and the glass fiber cloth are described above, the specific forms are not limited to this. The longitudinal carbon fiber strands and the latitudinal carbon fiber strands may be formed into other forms of the carbon fiber strand module as required, as long as the carbon fiber strands can be connected to each other.

In addition, according to an actual demand of heating intensity or a power requirement of a slip ring of different types of wind turbine, a heating power of the ice melting device for the blade can be adjusted by adjusting the number of carbon fiber strand modules or spacing between adjacent carbon fiber strand modules or the shapes of the carbon fiber strand modules or the form of the combination of carbon fiber strand modules, or by adjusting the type or the number of the carbon fiber strands . The spacing between the carbon fiber strands can be determined by the severity of icing at a portion where the ice is required to be melted, the type of the carbon fiber, a rated power of the ice melting device for the blade, and a width and a length of the ice melting device for the blade.

Besides, through a mass density of the carbon fiber strands and the glass fibers may be changed by adjusting the type or a tightness degree of weaving of the carbon fiber strands and glass fibers, and then the requirements of vacuum infusion, vacuum bag molding and pre-impregnation, so that the ice melting device for the blade is not only suitable to be integrally formed with a new blade, but also suitable to be built in an old blade. Specifically, the ice melting device for the blade may be integrally formed with the blade through a vacuum infusion process when a new blade is formed, or the pre-impregnated ice melting device for the blade may be built in the old blade through a vacuum bag molding process and then other layers may be provided to form a complete blade.

Moreover, in the present embodiment, the first electrode 20 and the second electrode 30 may be current-conducting sheets, and the current-conducting sheets may be clamped on the carbon fiber strands to be conductively connected to the carbon fiber strands. Optionally, the first electrode 20 and the second electrode 30 may be plated electrodes, that is, a portion of the carbon fiber strand which is required to be electrically connected may be plated with a metal to function as an electrode. During use, the carbon fiber strands connecting to the first electrode 20 and the second electrode 30 may be arranged in a length direction of the blade, to improve an ice melting effect for the blade.

Optionally, the connecting conductor 40 may be a current-conducting sheet. The connecting conductor 40 may be sewn on the glass fiber cloth or arranged to run through the glass fiber cloth, to allow the connecting conductor 40 to be fixed. In addition, the connecting conductor 40 may be insulated from the first electrode 20 and the carbon fiber strands, to form an electrical circuit, so as to avoid a short circuit. In a cast that the connecting conductor 40 is a current-conducting sheet, since the connecting conductor 40 is thin, in a case that the ice melting device for the blade is built in the blade and other layers are provided on the ice melting device for the blade to form a complete blade, partial protrusion of the layers due to a large thickness of the connecting conductor 40 may be prevented. However, the connecting conductor 40 is not limited to the current-conducting sheet, it may be other components which can function for electrical connection.

When the ice melting devices for the blade according to the first embodiment and the second embodiment are used to melt the ice on the blade, a constant voltage power source may be powered on at the first electrode 20 and the second end of the connecting conductor 40, and a current flows through each of the carbon fiber strands and the carbon fiber strands are energized to heat, so as to melt the ice on the blade.

In addition, according to the actual demands, the ice melting devices for the blade in Figures 1 and 2 may be used in cooperation, for example, the ice melting device for the blade in Figure 1 may be mounted on one of a PS surface (a pressure surface) and a SS surface (a suction surface) of the blade, and the ice melting device for the blade in Figure 2 may be mounted on the other of the PS surface and the SS surface of the blade, so that the power leads connecting to the first electrode 20 and the second electrode 30 can be located at a same side, but the arrangement is not limited to this. For instance, according to the actual demands, the ice melting device for the blade in Figure 1 or the ice melting device for the blade in Figure 2 may also be used individually, that is, the ice melting devices for the blade in Figure 1 may be mounted on the PS surface and the SS surface respectively, and the ice melting devices for the blade of Figure 2 also may be mounted on the PS surface and the SS surface respectively. Furthermore, a size and the number of the ice melting device for the blade may be appropriately chosen according to an area of the blade where the ice is required to be melted.

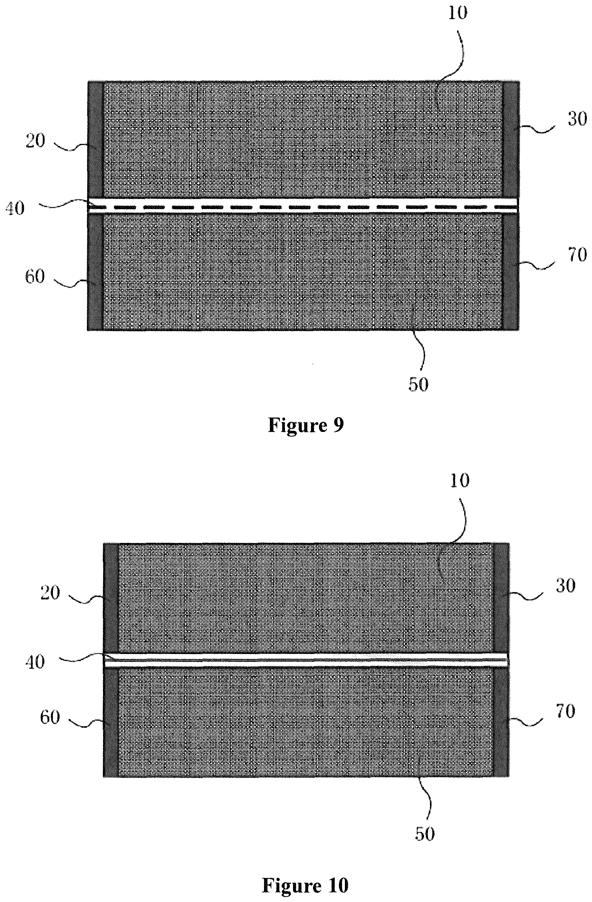

Although the specific structure of the ice melting device for the blade is described in detail above with reference to Figures 1 to 8, the ice melting device for the blade is not limited to this. Hereinafter, an ice melting device for a blade according to a third embodiment and an ice melting device for a blade according to a fourth embodiment of the present application will be described with reference to Figures 9 and 10.

Figure 9 is a schematic view showing the ice melting device for the blade according to the third embodiment of the present application.

As shown in Figure 9, in addition to the first heating portion 10, the first electrode 20 and the second electrode 30, and the connecting conductor 40, the ice melting device for the blade may further include a second heating portion 50, a third electrode 60, and a fourth electrode 70.

The second heating portion 50 and the first heating portion 10 may be arranged side by side in a width direction of the first heating portion 10. The third electrode 60 and the fourth electrode 70 may be arranged at two ends of the second heating portion 50 in a length direction, respectively. The connecting conductor 40 may be located between the first heating portion 10 and the second heating portion 50. A first end of the connecting conductor 40 may be connected to the second electrode 30 of the first heating potion 10 and the fourth electrode 70 of the second heating portion 50 respectively. A second end of the connecting conductor 40 is located at a same side as the first electrode 20 and the third electrode 60.

The configuration of the second heating portion 50 may be the same as that of the first heating portion 10. The configuration of the third electrode 60 and the fourth electrode 70 may also be the same as in the configuration of the first electrode 20 and the second electrode 30, respectively. Therefore, the description of the same components will be omitted for conciseness.

When the ice melting device for the blade is used, the first electrode 20 of the first heating portion 10 and the third electrode 60 of the second heating portion 50, and the second end of the connecting conductor 40 may be connected to positive and negative power leads respectively, to form an electrical circuit. Optionally, the first heating portion 10 and the second heating portion 50 may be integrally formed, and the first heating portion 10 and the second heating portion 50 may be connected by a glass fiber cloth. In this case, the connecting conductor 40 may be a current-conducting sheet, and the connecting conductor may be sewn on the glass fiber cloth connecting the first heating portion 10 and the second heating portion 50 or arranged to run through the glass fiber cloth, and may be insulated from the first electrode 20, the third electrode 60 and the carbon fiber strands.

Figure 10 is a schematic view showing the ice melting device for the blade according to the fourth embodiment of the present application.

The ice melting device for the blade according to the fourth embodiment of the present invention is different from the ice melting device for the blade according to the third embodiment of the present invention shown in Figure 9 in that, a predetermined space may be formed between the first heating portion 10 and the second heating portion 50. In this case, the connecting conductor may be a wire and is accommodated in the predetermined space.

As described above, since both the ice melting devices for the blade shown in Figures 9 and 10 include a second heating portion, the blade may be laid integrally by laying the first heating portion and the second heating portion on the PS surface and the SS surface of the blade respectively, so as to save the time and cost for operation and maintenance. The blade is integrally laid, and the connecting conductor 40 is arranged at a joint between the PS and the SS surface thereby reducing the time and cost for operation and maintenance.

According to the ice melting device for the blade of the present application, with the connecting conductor, power leads connecting to the first electrode and the second electrode are allowed be located at a same side, thereby, in a case that an old blade is modified, an increase of a layer thickness caused by the power leads may be greatly reduced. In addition, the cumbersome wiring work may be reduced and the power leads may be saved.

In addition, according to the ice melting device for the bladeof the embodiment of the present application, the carbon fiber strands of the first heating portion is fixed by the first electrode and the second electrode and by an overlock treatment, which prevents the carbon fiber strands from loosing, so that the carbon fiber strands have a good performance in maintaining a stationary shape.

Besides, according to the ice melting device for the blade of the embodiment of the present application, by using the glass fibers as an insulating material, carbon fibers in a carbon fiber strand can be prevented from being mixed with the adjacent carbon fiber strands, thereby preventing a short circuit.

Moreover, according to the ice melting device for the blade of the embodiment of the present application, since the longitudinal carbon fiber strands and the latitudinal carbon fiber strands are conductively connected to each other, the heating effect of the melting device for the blade can be prevented from being affected by the breaking of a carbon fiber strand at a certain position.

Further, the ice melting device for the blade according to the embodiment of the present application may be designed to have different heating power according to the requirements of the blade, and may be integrally formed with a new blade or built in an old blade.

Furthermore, the ice melting device for the blade according to the embodiment of the present application has a simple manufacturing process and does not required to be assembled in use.

Although the embodiments of the present application are described in detail hereinbefore, various modifications and variations can be made to the embodiments of the present application by those skilled in the art without departing from the scope of the present application. However, it should be understood by those skilled in the art that these modifications and variations still fall in the scope of the embodiments of the present application as defined by the appended claims.

## Claims

1. An ice melting device for a wind turbine blade, comprising:
a first heating portion (10);
a first electrode (20) and a second electrode (30), wherein the first electrode (20) and the second electrode (30) are arranged at two ends of the first heating portion (10) in a length direction, respectively;
a connecting conductor (40), wherein the connection conductor (40) extends in the length direction, a first end of the connecting conductor (40) is connected to the second electrode (30), and a second end of the connecting conductor (40) and the first electrode (20) are located at a same side; and
the first heating portion (10) comprises a glass fiber cloth and carbon fiber strands, and the carbon fiber strands are sewn on the glass fiber cloth or the carbon fiber strands are interwoven with glass fibers of the glass fiber cloth, to be integrated with the glass fiber cloth, and the carbon fiber strands are conductively connected to the first electrode (20) and the second electrode (30); **characterized in that**,
the connecting conductor (40) is a current-conducting sheet, the connecting conductor (40) is sewn on the glass fiber cloth or arranged to run through the glass fiber cloth, and the connecting conductor (40) is insulated from the first electrode (20) and the carbon fiber strands.

2. The ice melting device according to claim 1, wherein the carbon fiber strands comprise longitudinal carbon fiber strands and latitudinal carbon fiber strands arranged on the glass fiber cloth in a longitudinal direction and a latitudinal direction respectively, and the longitudinal carbon fiber strands and the latitudinal carbon fiber strands are conductively connected to each other.

3. The ice melting device according to claim 2, wherein the longitudinal carbon fiber strands and the latitudinal carbon fiber strands are arranged crosswise, to form a grid structure with the longitudinal carbon fiber strands and the latitudinal carbon fiber strands cross each other at each node.

4. An ice melting device for a wind turbine blade, comprising
a first heating portion (10) and a second heating portion (50), wherein the first heating portion (10) and the second heating portion (50) are arranged side by side in a width direction of the first heating portion (10);
a first electrode (20), a second electrode (30), a third electrode (60) and a fourth electrode (70), wherein the first electrode (20) and the second electrode (30) are arranged at two ends of the first heating portion (10) in a length direction, respectively, and the third electrode (60) and the fourth electrode (70) are arranged at two ends of the second heating portion (50) in a length direction, respectively;
**characterized by**
a connecting conductor (40), wherein the connection conductor (40) extends in the length direction, the connecting conductor (40) is located between the first heating portion (10) and the second heating portion (50), a first end of the connecting conductor (40) is connected to the second electrode (30) and the fourth electrode (70), and a second end of the connecting conductor (40) is located at a same side as the first electrode (20) and the third electrode (60); wherein
the first heating portion (10) and the second heating portion (50) are connected through a glass fiber cloth, the connecting conductor (40) is a current-conducting sheet and the connecting conductor (40) is sewn on the glass fiber cloth connecting the first heating portion (10) and the second heating portion (50) or arranged to run through the glass fiber cloth, and the connecting conductor (40) is insulated from the first electrode (20), the third electrode (60), and the carbon fiber strands.

5. The ice melting device according to claim 4, wherein in a case that the first heating portion (10) and the second heating portion (50) are configured to be arranged on a pressure surface and a suction surface of a blade respectively, the connecting conductor (40) is configured to be located at a joint between the pressure surface and the suction surface.

6. The ice melting device according to claim 4, wherein a predetermined space is formed between the first heating portion (10) and the second heating portion (50), the connecting conductor (40) is a wire and is accommodated in the predetermined space; in a case that the first heating portion (10) and the second heating portion (50) are arranged on a pressure surface and a suction surface of a blade respectively, the connecting conductor (40) is located at a joint between the pressure surface and the suction surface.

7. A wind turbine blade, **characterized by** comprising the ice melting device according to any one of claims 1 to 6, wherein the ice melting device is built in the wind turbine blade.

8. A wind turbine, **characterized by** comprising the wind turbine blade according to claim 7.

## Patentansprüche

1. Eisschmelzvorrichtung für ein Windturbinenblatt, mit:
einem ersten Heizabschnitt (10);
einer ersten Elektrode (20) und einer zweiten Elektrode (30), wobei die erste Elektrode (20) und die zweite Elektrode (30) jeweils an zwei Enden des ersten Heizabschnitts (10) in einer Längsrichtung angeordnet sind;
einem Verbindungsleiter (40), wobei sich der Verbindungsleiter (40) in der Längsrichtung erstreckt, ein erstes Ende des Verbindungsleiters (40) mit der zweiten Elektrode (30) verbunden ist und ein zweites Ende des Verbindungsleiters (40) und die erste Elektrode (20) auf der gleichen Seite angeordnet sind, und
wobei der erste Heizabschnitt (10) ein Glasfasergewebe und Kohlenstofffaserstränge aufweist, wobei die Kohlenstofffaserstränge auf das Glasfasergewebe aufgenäht sind oder die Kohlenstofffaserstränge mit Glasfasern des Glasfasergewebes verwoben sind, um mit dem Glasfasergewebe integriert zu werden, und wobei die Kohlenstofffaserstränge leitend mit der ersten Elektrode (20) und der zweiten Elektrode (30) verbunden sind,
**dadurch gekennzeichnet, dass**,
der Verbindungsleiter (40) eine stromleitende Lage ist, der Verbindungsleiter (40) auf das Glasfasergewebe aufgenäht oder derart angeordnet ist, dass er sich durch das Glasfasergewebe erstreckt, und der Verbindungsleiter (40) von der ersten Elektrode (20) und den Kohlenstofffasersträngen (30) isoliert ist.

2. Eisschmelzvorrichtung nach Anspruch 1, wobei die Kohlenstofffaserstränge sich in Längsrichtung erstreckende Kohlenstofffaserstränge und sich in Breitenrichtung erstreckende Kohlenstofffaserstränge aufweisen, die auf dem Glasfasergewebe in einer Längsrichtung bzw. einer Breitenrichtung angeordnet sind, wobei die sich in Längsrichtung erstreckenden Kohlenstofffaserstränge und die sich in Breitenrichtung erstreckenden Kohlenstofffaserstränge leitend miteinander verbunden sind.

3. Eisschmelzvorrichtung nach Anspruch 2, wobei die sich in Längsrichtung erstreckenden Kohlenstofffaserstränge und die sich in Breitenrichtung erstreckenden Kohlenstofffaserstränge kreuzweise angeordnet sind, um eine Gitterstruktur zu bilden, wobei die sich in Längsrichtung erstreckenden Kohlenstofffaserstränge und die sich in Querrichtung erstreckenden Kohlenstofffaserstränge einander an jeweiligen Knotenpunkten kreuzen.

4. Eisschmelzvorrichtung für ein Windturbinenblatt, mit:
einem ersten Heizabschnitt (10) und einem zweiten Heizabschnitt (50), wobei der erste Heizabschnitt (10) und der zweite Heizabschnitt (50) in einer Breitenrichtung des ersten Heizabschnitts (10) nebeneinander angeordnet sind;
einer ersten Elektrode (20), einer zweiten Elektrode (30), einer dritten Elektrode (60) und einer vierten Elektrode (70), wobei die erste Elektrode (20) und die zweite Elektrode (30) in einer Längsrichtung jeweils an zwei Enden des ersten Heizabschnitts (10) angeordnet sind, und die dritte Elektrode (60) und die vierte Elektrode (70) in einer Längsrichtung jeweils an zwei Enden des zweiten Heizabschnitts (50) angeordnet sind,
**gekennzeichnet durch**
einen Verbindungsleiter (40), wobei sich der Verbindungsleiter (40) in der Längsrichtung erstreckt, der Verbindungsleiter (40) zwischen dem ersten Heizabschnitt (10) und dem zweiten Heizabschnitt (50) angeordnet ist, ein erstes Ende des Verbindungsleiters (40) mit der zweiten Elektrode (30) und der vierten Elektrode (70) verbunden ist, und wobei ein zweites Ende des Verbindungsleiters (40) auf der gleichen Seite angeordnet ist wie die erste Elektrode (20) und die dritte Elektrode (60), wobei
der erste Heizabschnitt (10) und der zweite Heizabschnitt (50) durch ein Glasfasergewebe verbunden sind, der Verbindungsleiter (40) eine stromleitende Lage ist und der Verbindungsleiter (40) auf das Glasfasergewebe, das den ersten Heizabschnitt (10) und den zweiten Heizabschnitt (50) verbindet, aufgenäht ist oder derart angeordnet ist, dass er sich durch das Glasfasergewebe erstreckt, und der Verbindungsleiter (40) von der ersten Elektrode (20), der dritten Elektrode (60) und den Kohlenstofffasersträngen isoliert ist.

5. Eisschmelzvorrichtung nach Anspruch 4, wobei in einem Fall, in dem der erste Heizabschnitt (10) und der zweite Heizabschnitt (50) dafür konfiguriert sind, auf einer Druckfläche bzw. einer Saugfläche eines Blatts angeordnet zu werden, der Verbindungsleiter (40) dafür konfiguriert ist, an einer Verbindungsstelle zwischen der Druckfläche und der Saugfläche angeordnet zu werden.

6. Eisschmelzvorrichtung nach Anspruch 4, wobei ein vorgegebener Raum zwischen dem ersten Heizabschnitt (10) und dem zweiten Heizabschnitt (50) ausgebildet ist, der Verbindungsleiter (40) ein Draht ist und in dem vorgegebenen Raum aufgenommen ist, und in einem Fall, in dem der erste Heizabschnitt (10) und der zweite Heizabschnitt (50) auf einer Druckfläche bzw. einer Saugfläche eines Blatts angeordnet sind, der Verbindungsleiter (40) an einer Verbindungsstelle zwischen der Druckfläche und der Saugfläche angeordnet ist.

7. Windturbinenblatt, **dadurch gekennzeichnet, dass** es die Eisschmelzvorrichtung nach einem der Ansprüche 1 bis 6 aufweist, wobei die Eisschmelzvorrichtung in das Windturbinenblatt eingebaut ist.

8. Windturbine, **dadurch gekennzeichnet, dass** sie das Windturbinenblatt nach Anspruch 7 aufweist.

## Revendications

1. Dispositif de fonte de glace pour une pale d'éolienne, comprenant :
une première portion chauffante (10) ;
une première électrode (20) et une deuxième électrode (30), lesquelles première électrode (20) et deuxième électrode (30) sont disposées à deux extrémités de la première portion chauffante (10) dans la direction de la longueur, respectivement ;
un conducteur de connexion (40), lequel conducteur de connexion (40) s'étend dans la direction de la longueur, dans lequel une première extrémité du conducteur de connexion (40) est connectée à la deuxième électrode (30) et une deuxième extrémité du conducteur de connexion (40) et la première électrode (20) sont situées sur un même côté ; et
la première portion chauffante (10) comprend une étoffe en fibres de verre et des brins en fibres de carbone, et les brins en fibres de carbone sont cousus sur l'étoffe en fibres de verre ou bien les brins en fibres de carbone sont entrelacés avec les fibres de verre de l'étoffe en fibres de verre, pour être intégrés avec l'étoffe en fibres de verre, et les brins en fibres de carbone sont connectés de manière conductrice à la première électrode (20) et à la deuxième électrode (30),
**caractérisé en ce que** le conducteur de connexion (40) est une feuille conductrice de courant, le conducteur de connexion (40) est cousu sur l'étoffe en fibres de verre ou disposé de manière à traverser l'étoffe en fibres de verre, et le conducteur de connexion (40) est isolé de la première électrode (20) et des brins en fibres de carbone.

2. Dispositif de fonte de glace selon la revendication 1, dans lequel les brins en fibres de carbone comprennent des brins en fibres de carbone longitudinaux et des brins en fibres de carbone latitudinaux disposés sur l'étoffe en fibres de verre dans la direction longitudinale et la direction latitudinale respectivement, et les brins en fibres de carbone longitudinaux et les brins en fibres de carbone latitudinaux sont connectés de manière conductrice les uns aux autres.

3. Dispositif de fonte de glace selon la revendication 2, dans lequel les brins en fibres de carbone longitudinaux et les brins en fibres de carbone latitudinaux sont disposés en croix, pour former une structure de grille dans laquelle les brins en fibres de carbone longitudinaux et les brins en fibres de carbone latitudinaux se croisent les uns les autres au niveau de chaque noeud.

4. Dispositif de fonte de glace pour une pale d'éolienne, comprenant
une première portion chauffante (10) et une deuxième portion chauffante (50), lesquelles première portion chauffante (10) et deuxième portion chauffante (50) sont disposées côte à côte dans la direction de la largeur de la première portion chauffante (10) ;
une première électrode (20), une deuxième électrode (30), une troisième électrode (60) et une quatrième électrode (70), parmi lesquelles la première électrode (20) et la deuxième électrode (30) sont disposées à deux extrémités de la première portion chauffante (10) dans la direction de la longueur, respectivement, et la troisième électrode (60) et la quatrième électrode (70) sont disposées à deux extrémités de la deuxième portion chauffante (50) dans la direction de la longueur, respectivement ;
**caractérisé par** un conducteur de connexion (40), lequel conducteur de connexion (40) s'étend dans la direction de la longueur, lequel conducteur de connexion (40) est situé entre la première portion chauffante (10) et la deuxième portion chauffante (50), dans lequel une première extrémité du conducteur de connexion (40) est connectée à la deuxième électrode (30) et à la quatrième électrode (70), et une deuxième extrémité du conducteur de connexion (40) est située du même côté que la première électrode (20) et la troisième électrode (60) ;
dans lequel la première portion chauffante (10) et la deuxième portion chauffante (50) sont connectées par l'intermédiaire d'une étoffe en fibres de verre, le conducteur de connexion (40) est une feuille conductrice de courant et le conducteur de connexion (40) est cousu sur l'étoffe en fibres de verre connectant la première portion chauffante (10) et la deuxième portion chauffante (50), ou est disposé de manière à traverser l'étoffe en fibres de verre, et le conducteur de connexion (40) est isolé de la première électrode (20), de la troisième électrode (60), et des brins en fibres de carbone.

5. Dispositif de fonte de glace selon la revendication 4, dans lequel, dans le cas où la première portion chauffante (10) et la deuxième portion chauffante (50) sont configurées de manière à être disposées sur une surface de pression et une surface d'aspiration d'une pale respectivement, le conducteur de connexion (40) est configuré de manière à être situé au niveau d'une jointure entre la surface de pression et la surface d'aspiration.

6. Dispositif de fonte de glace selon la revendication 4, dans lequel un espace prédéterminé est formé entre la première portion chauffante (10) et la deuxième portion chauffante (50), le conducteur de connexion (40) est un fil et est logé dans l'espace prédéterminé ; dans le cas où la première portion chauffante (10) et la deuxième portion chauffante (50) sont disposées sur une surface de pression et une surface d'aspiration d'une pale respectivement, le conducteur de connexion (40) est situé au niveau d'une jointure entre la surface de pression et la surface d'aspiration.

7. Pale d'éolienne, **caractérisée en ce qu'**elle comprend le dispositif de fonte de glace selon l'une quelconque des revendications 1 à 6, dans laquelle le dispositif de fonte de glace est intégré à la pale d'éolienne.

8. Eolienne **caractérisée en ce qu'**elle comprend la pale d'éolienne selon la revendication 7.
